# FASCICULE DE BREVET EUROPEEN

(11) **EP 1 178 653 B1**
(45) Date de publication et mention de la délivrance du brevet: **08.09.2010**
(21) Numéro de dépôt: 01402055.6
(22) Date de dépôt: 30.07.2001
(51) Int. Cl.: H04M 1/725

(54) **Terminal pour le raccordement à un réseau de télécommunication par voie hertzienne**
Terminal zur Verbindung mit einem Funktelekommunikationsnetzwerk
Terminal for communication over a radiotelecommunication network

(30) Priorité: 31.07.2000 FR 0010058
(43) Date de publication de la demande: 06.02.2002
(73) Titulaire: Sagem Mobiles, 75015 Paris (FR)
(72) Inventeur: Andre, Thomas, 75008 Paris (FR); Osson, Daniel, 95620 Parmain (FR)
(74) Mandataire: Maillet, Alain

(56) Documents cités:
- EP-A- 0 643 518
- EP-A- 0 830 042
- EP-A- 0 849 965
- EP-A- 0 863 648
- WO-A-98/47300
- DE-A- 19 800 967
- US-A- 5 533 097
- US-A- 5 978 684

## Description

La présente invention est relative aux terminaux du type de ceux aptes à raccorder à un réseau de télécommunication par voie hertzienne un ou des postes téléphoniques fixes d'une ligne du réseau téléphonique filaire.

On connaît déjà des terminaux permettant de raccorder à un réseau de télécommunication par voie hertzienne les différents postes téléphoniques fixes installés chez un abonné, c'est à dire les différents postes reliés à une même ligne d'abonné qui fait normalement partie du réseau téléphonique filaire.

Classiquement, un tel terminal de raccordement se présente sous la forme d'un boîtier qui intègre une électronique d'émission/réception radio analogue à celle d'un téléphone portable et comporte des moyens de connectique qui permettent son raccordement aux paires de fils de cuivre de la ligne chez l'abonné, par exemple au moyen d'une liaison filaire à fiche du type de celles habituellement utilisées pour les téléphones fixes classiques, cette électronique d'émission/réception et ces moyens de connectique étant assemblés de façon à permettre, à l'aide dudit terminal de raccordement, d'utiliser le réseau hertzien pour des communications passées à partir d'un poste fixe ou reçues sur un tel poste.

Le boîtier d'un tel terminal de raccordement intègre en outre généralement des moyens d'interface homme/machine et notamment un écran et un clavier.

Un terminal conforme au préambule de la revendication 1 est par exemple décrit dans EP 863 648, notamment en référence à sa figure 5 .

On souhaite pouvoir permettre à un utilisateur d'avoir accès, avec un tel terminal de raccordement, aux différentes fonctionnalités auxquelles, outre la simple téléphonie, un téléphone portable peut permettre d'avoir accès : agenda, bloc-notes, organisateur, messages alphanumériques courts ("SMS"), e-mèls, jeux, etc..

Toutefois, un problème qui se pose tient en ce que la couverture d'un réseau hertzien n'est généralement pas homogène sur l'ensemble d'une habitation de sorte que la couverture maximale dans une habitation ne correspond pas nécessairement à une zone permettant pour l'utilisateur une utilisation conviviale du terminal lorsqu'il souhaite avoir accès à l'une des fonctionnalités évoquées ci-dessus.

L'invention propose une solution qui permet de résoudre ce problème.

On connaît par EP 643 518 des embases pour téléphone portatif, reliées au réseau téléphonique filaire.

Cette embase ne constitue aucunement un terminal destiné à raccorder un ou plusieurs poste(s) téléphonique(s) fixe(s) à un réseau de télécommunication par voie hertzienne.

L'invention propose quant à elle un terminal apte à raccorder à un réseau de télécommunication par voie hertzienne un ou plusieurs postes téléphoniques fixes d'une ligne d'un réseau téléphonique filaire, comportant un boîtier qui intègre une électronique d'émission/réception radio pour la liaison dudit terminal au réseau hertzien et qui comporte des moyens de connectique qui permettent son raccordement aux paires de fils de cuivre de la ligne du réseau filaire, ledit terminal comportant en outre des moyens d'interface homme/machine, **caractérisé en ce que** lesdits moyens d'interface sont séparés du boîtier ou aptes à l'être, des moyens permettant à ces moyens d'interface d'échanger à distance, dans un sens et dans l'autre, avec des moyens du boîtier.

Notamment, un tel terminal est avantageusement complété par les différentes caractéristiques suivantes prises seules ou selon toutes leurs combinaisons techniquement possibles :
- les moyens d'interface amovibles comportent notamment un écran d'affichage intégré dans un bloc apte à être reçu de façon amovible dans un logement complémentaire prévu à cet effet sur le boîtier ;
- l'écran est de type tactile ;
- un clavier alphanumérique est intégré au même bloc que l'écran.
- un clavier alphanumérique est relié au bloc de l'écran par un cordon ;
- le boîtier intègre des moyens d'impression et est apte à être utilisé comme imprimante ou comme télécopieur ;
- le terminal est équipé d'un haut-parleur et d'un microphone pour une utilisation en mode « Ecoute Amplifiée » ou en mode « Main Libre » ;
- les moyens d'interface amovibles comportent un haut-parleur et/ou écouteur, ainsi qu'un microphone pour être utilisé comme un combiné téléphonique, en mode standard (avec l'écouteur) ou en mode « Ecoute Amplifiée » ou en mode « Main libre » avec le haut-parleur ;
- le terminal ou les moyens d'interface amovibles sont équipés d'un lecteur de carte à puce pour pouvoir, par exemple, s'identifier, bénéficier de fonctionnalités supplémentaires sur le terminal, payer de la marchandise ou des services à distance, etc ;
- le terminal permet un raccordement au moyen de la liaison filaire à fiche non seulement des téléphones fixes classiques, mais également, selon les options, des téléphones sans fils, un fax, phone-fax, ou un modem pour y relier un ordinateur ou autre organisateur électronique. Il est également prévu, selon les options, de pouvoir brancher un ordinateur ou un organisateur électronique par une liaison de donnée (liaison série, bus parallèle, bus USB, liaison infrarouge, etc), sachant évidemment que cette liaison peut également être réalisée par le même moyen d'échange à distance que celui utilisé entre le terminal et les moyens d'interface amovibles.

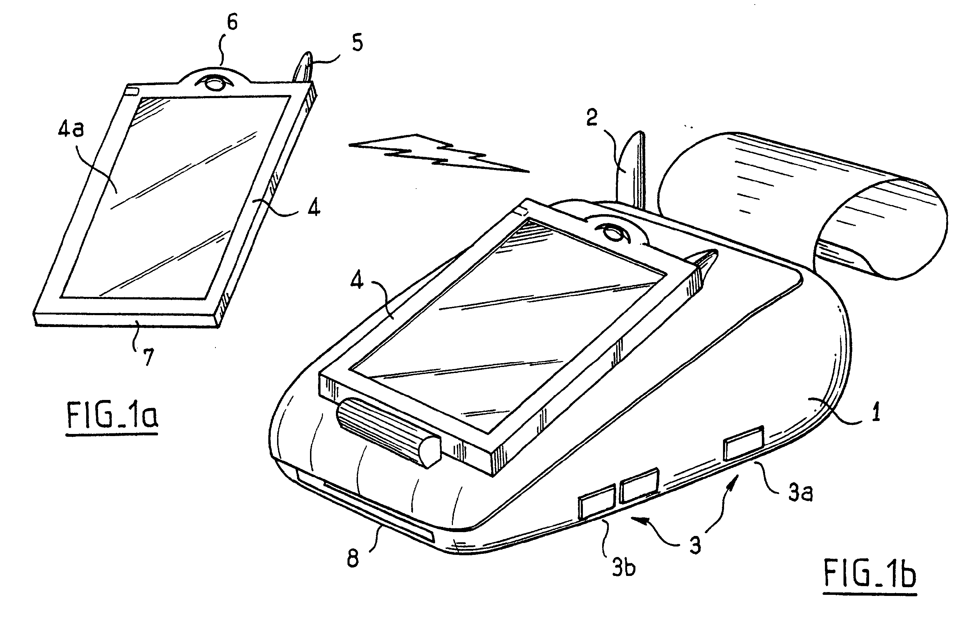

D'autres caractéristiques et avantages de l'invention ressortiront encore de la description qui suit, laquelle est purement illustrative et non limitative et doit être lue en regard des figures 1a et 1b annexées, qui illustrent un mode de réalisation possible de l'invention.

Le terminal de raccordement qui est représenté sur la figure 1 comporte un boîtier 1 qui comprend des moyens d'émission/réception radio (antenne 2), ainsi que des moyens de connectique 3 destinés à recevoir des moyens complémentaires d'une liaison filaire se terminant à son autre extrémité par une fiche du type de celles habituellement utilisées pour le raccordement des téléphones fixes classiques aux paires de fils de cuivre de la ligne chez l'abonné. L'antenne 2 peut être une antenne interne et/ou amovible pour permettre de la remplacer par une antenne distante.

Ce terminal de raccordement comporte également des moyens d'interface homme/machine 4, qui ont la particularité d'être amovibles par rapport au boîtier 1, des moyens permettant à ces moyens d'interface amovibles 4 d'échanger à distance, dans un sens et dans l'autre, avec le reste du terminal de raccordement.

Notamment, ces moyens d'interface amovibles 4 peuvent dialoguer avec le reste du terminal de raccordement en utilisant des technologies de transmission par radio, tels que Bluetooth, DECT (DPRS), 802.11, etc., des moyens d'émission/réception (antenne 5) étant à cet effet prévus sur les moyens d'interface 4 en complément des moyens d'émission/réception sur le boîtier 1 (antenne 2).

Les moyens d'interface amovibles 4 comportent notamment un écran d'affichage 4a intégré dans un bloc apte à être reçu dans un logement complémentaire prévu à cet effet sur le boîtier 1, et notamment sur une face principale de celui-ci.

Ce bloc se présente avantageusement sous un format similaire à ceux des assistants digitaux personnels de poche.

L'écran 4a est avantageusement de type tactile. En variante ou en complément, il peut être prévu un clavier alphanumérique intégré au même bloc que l'écran 4a ou relié à celui-ci par un cordon.

Par ailleurs, le boîtier 1 intègre préférentiellement des moyens d'impression qui permettent d'utiliser le terminal de raccordement comme imprimante, voir comme télécopieur.

Le terminal de raccordement 1 peut être équipé d'un haut-parleur et d'un microphone pour l'utiliser en mode « Ecoute Amplifiée » ou en mode « Main Libre ».

Les moyens d'interface amovibles 4 peuvent également comporter un haut-parleur 6 et/ou écouteur, ainsi qu'un microphone 7 pour être utilisé comme un combiné téléphonique, en mode standard (avec l'écouteur) ou en mode « Ecoute Amplifiée » ou en mode « Main Libre » avec le haut-parleur.

Le terminal de raccordement 1 ou les moyens d'interface amovibles 4 peuvent être équipés d'un lecteur de carte à puce 8 pour pouvoir, par exemple, s'identifier, bénéficier de fonctionnalités supplémentaires sur le terminal, payer de la marchandise ou des services à distance, etc.

Le terminal de raccordement 1 permet un raccordement au moyen de la liaison filaire à fiche non seulement des téléphones fixes classiques, mais également, selon les options, des téléphones sans fils, un fax, phone-fax, ou un modem pour y relier un ordinateur ou autre organisateur électronique. Il est également prévu, selon les options, de pouvoir brancher un ordinateur ou un organisateur électronique par une liaison de donnée (liaison série, bus parallèle, bus USB, liaison infrarouge, etc.), sachant évidemment que cette liaison peut également être réalisée par le même moyen d'échange à distance que celui utilisé entre le terminal de raccordement et les moyens d'interface amovibles.

Les moyens de connectique 3 illustrés sur la figure 1b comprennent une prise 3a pour l'alimentation électrique du terminal à partir du secteur ou sur batterie et des prises 3b pour téléphone filaire et/ou fax et/ou données (par exemple à partir de modem ou de type numérique).

## Revendications

1. Terminal apte à raccorder à un réseau de télécommunication par voie hertzienne un ou plusieurs postes téléphoniques fixes d'une ligne d'un réseau téléphonique filaire, comportant un boîtier (1) qui intègre une électronique d'émission/réception radio (2) pour la liaison dudit terminal au réseau hertzien et qui comporte des moyens de connectique (3) qui permettent son raccordement aux paires de fils de cuivre de la ligne du réseau filaire, ledit terminal comportant en outre des moyens d'interface homme/machine (4), **caractérisé en ce que** lesdits moyens d'interface (4) sont séparés du boîtier (1) ou aptes à l'être, des moyens permettant à ces moyens d'interface (4) d'échanger à distance, dans un sens et dans l'autre, avec des moyens du boîtier (1).

2. Terminal selon la revendication 1, **caractérisé en ce que** les moyens d'interface (4) amovibles comportent notamment un écran d'affichage (4a) intégré dans un bloc apte à être reçu de façon amovible dans un logement complémentaire prévu à cet effet sur le boîtier (1).

3. Terminal selon la revendication 2, **caractérisé en ce que** l'écran (4a) est de type tactile.

4. Terminal selon l'une des revendications 2 et 3, **caractérisé en ce qu'**un clavier alphanumérique est intégré au même bloc que l'écran (4a).

5. Terminal selon l'une des revendications 2 et 3, **caractérisé en ce qu'**un clavier alphanumérique est relié au bloc de l'écran (4a) par un cordon.

6. Terminal selon l'une des revendications précédentes, **caractérisé en ce que** le boîtier (1) intègre des moyens d'impression et est apte à être utilisé comme imprimante ou comme télécopieur.

7. Terminal selon l'une des revendications précédentes, **caractérisé en ce qu'**il est équipé d'un haut-parleur et d'un microphone pour une utilisation en mode « Ecoute Amplifiée » ou en mode « Main Libre ».

8. Terminal selon l'une des revendications précédentes, **caractérisé en ce que** les moyens d'interface amovibles (4) comportent un haut-parleur et/ou écouteur (6), ainsi qu'un microphone (7) pour être utilisé comme un
combiné téléphonique, en mode standard avec l'écouteur ou en mode « Ecoute Amplifiée » ou en mode « Main Libre » avec le haut parleur.

9. Terminal selon l'une des revendications précédentes, **caractérisé en ce que** les moyens d'interface amovibles (4) sont équipés d'un lecteur de carte à puce (8) pour pouvoir, par exemple, s'identifier, bénéficier de fonctionnalités supplémentaires sur le terminal, payer de la marchandise ou des services à distance.

10. Terminal selon l'une des revendications précédentes, **caractérisé en ce que** le terminal (1) permet un raccordement au moyen d'une liaison filaire à fiche non seulement des téléphones fixes classiques, mais également, selon les options, des téléphones sans fils, un fax, phone-fax, ou un modem pour y relier un ordinateur ou autre organisateur électronique.

## Claims

1. Terminal adapted to provide a radio connection to a telecommunications network for one or more fixed telephone handsets of a wired telephone network, comprising a housing (1) which integrates electronic radio transmitting/receiving means (2) for connecting said terminal to the radio network and which comprises connecting means (3) enabling it to be connected to the pairs of copper wires of the wired network line, said terminal further comprising man/machine interface means (4), **characterised in that** said interface means (4) are separate from the housing (1) or adapted to be so, while means are provided allowing these interface means (4) to communicate remotely, in both directions, with the means in the housing (1).

2. Terminal according to claim 1, **characterised in that** the removable interface means (4) comprise in particular a display screen (4a) integrated in a unit adapted to be held removably in a complementary recess provided for this purpose on the housing (1).

3. Terminal according to claim 2, **characterised in that** the screen (4a) is a touch screen.

4. Terminal according to one of claims 2 and 3, **characterised in that** an alphanumeric keyboard is integrated in the same unit as the screen (4a).

5. Terminal according to one of claims 2 and 3, **characterised in that** an alphanumeric keyboard is connected to the screen unit (4a) by a cord.

6. Terminal according to one of the preceding claims, **characterised in that** the housing (1) includes printing means and is adapted to be used as a printer or fax.

7. Terminal according to one of the preceding claims, **characterised in that** it is equipped with a speaker and a microphone for use in "Amplified" mode or "Hands-free" mode.

8. Terminal according to one of the preceding claims, **characterised in that** the removable interface means (4) comprise a speaker and/or earphone (6) and a microphone (7) to be used as a telephone handset, in standard mode with the earphone or in "Amplified" mode or "Hands-free" mode with the speaker.

9. Terminal according to one of the preceding claims, **characterised in that** the removable interface means (4) are equipped with a chip card reader (8) to make it possible, for example, to identify oneself, take advantage of additional functions on the terminal, or pay for goods or services remotely.

10. Terminal according to one of the preceding claims, **characterised in that** the terminal (1) makes it possible to connect by means of a plug-in wired connection not only conventional fixed telephones but also, depending on the options, wireless telephones, a fax machine, a telephone/fax machine, or a modem for connecting a computer or other electronic organiser thereto.

## Patentansprüche

1. Terminal zum Anschluss an ein Telekommunikationsnetz durch drahtlose Übertragung eines oder mehrerer Festtelefonapparate einer Leitung eines drahtgestützten Telefonnetzes, aufweisend ein Gehäuse (1), das eine elektronische Sende/Empfangsantenne (2) zur Verbindung des Terminals mit dem drahtlosen Netz enthält und Anschlusseinrichtungen (3) aufweist, die seinen Anschluss an Kupferdrahtpaare der Leitung des drahtgestützten Netzes aufweisen, wobei das Terminal außerdem Mensch/Maschine-Interface-Einrichtungen (4) aufweist, **dadurch gekennzeichnet, dass** die Interface-Einrichtungen (4) vom Gehäuse (1) getrennt sind oder es sein können, wobei Einrichtungen es diesen Interface-Einrichtungen (4) ermöglichen, eine Fernübertragung in beiden Richtungen mit den Einrichtungen des Gehäuses (1) durchzuführen.

2. Terminal nach Anspruch 1, **dadurch gekennzeichnet, dass** die abnehmbaren Interface-Einrichtungen (4) insbesondere einen Monitor (4a) aufweisen, der in eine Baugruppe integriert ist, die abnehmbar in einer komplementären Ausnehmung aufgenommen werden kann, die zu diesem Zweck am Gehäuse (1) vorgesehen ist.

3. Terminal nach Anspruch 2, **dadurch gekennzeichnet, dass** der Monitor (4a) vom Tastaturtyp ist.

4. Terminal nach einem der Ansprüche 2 und 3, **dadurch gekennzeichnet, dass** eine alphanumerische Tastatur in dieselbe Baugruppe wie der Monitor (4a) integriert ist.

5. Terminal nach einem der Ansprüche 2 und 3, **dadurch gekennzeichnet, dass** eine alphanumerische Tastatur mit der Baugruppe des Monitors (4a) durch ein Kabel verbunden ist.

6. Terminal nach einem der vorhergehenden Ansprüche, **dadurch gekennzeichnet, dass** das Gehäuse (1) Druckeinrichtungen enthält und als ein Drucker oder Fernkopierer verwendbar ist.

7. Terminal nach einem der vorhergehenden Ansprüche, **dadurch gekennzeichnet, dass** es mit einem Lautsprecher und einem Mikrofon zur Verwendung im "Freisprech"- oder "Freihand"-Modus versehen ist.

8. Terminal nach einem der vorhergehenden Ansprüche, **dadurch gekennzeichnet, dass** die abnehmbaren Interface-Einrichtungen (4) einen Lautsprecher und/oder einen Hörer (6) aufweisen, ebenso wie ein Mikrofon (7), um als ein kombiniertes Telefon im Standardmodus mit dem Hörer oder im "Freisprech"- oder im "Freihand"-Modus mit dem Lautsprecher verwendet werden zu können.

9. Terminal nach einem der vorhergehenden Ansprüche, **dadurch gekennzeichnet, dass** die abnehmbaren Interface-Einrichtungen (4) mit einem Kartenleserchip (8) versehen sind, um sich z.B. zu identifizieren, zusätzliche Funktionalitäten am Terminal zu nutzen, und Waren oder Ferndienste zu bezahlen.

10. Terminal nach einem der vorhergehenden Ansprüche, **dadurch gekennzeichnet, dass** das Terminal (1) einen Anschluss nicht nur von üblichen Festtelefonen, sondern auch wahlweise von drahtlosen Telefonen, einem Faxgerät, ein Fonfaxgerät oder ein Modem mittels einer Drahtsteckverbindung ermöglicht, um einen Rechner oder einen anderen elektronischen Organizer anzuschließen.
